# EUROPÄISCHE PATENTANMELDUNG

(11) **EP 0 822 362 A2**
(43) Veröffentlichungstag der Anmeldung: **04.02.1998**
(21) Anmeldenummer: 97112412.8
(22) Anmeldetag: 19.07.1997
(51) Int. Cl.: F16K 31/06

(54) **Magnetventil mit Druckausgleich**

(30) Priorität: 01.08.1996 DE 19631000; 04.10.1996 DE 19640897
(71) Anmelder: Binder Magnete GmbH, 78048 Villingen-Schwenningen (DE)
(72) Erfinder: Oesterle, Hans Peter, 78609 Tuningen (DE); Schäfer, Heinz, 78048 VS-Villingen (DE); Blaffert, Wolfgang, 78628 Rottweil (DE); Zelano, Frank, 78112 St. Georgen (DE)
(74) Vertreter: Patentanwälte Westphal, Buchner, Mussgnug Neunert, Göhring

(57) **Zusammenfassung**

Das Magnetventil weist einen Ventilsitz (4) auf, der feststehend mit einer Membran (3), auf die im Betrieb des Magnetventils das Druckmittel drückt, verbunden ist. Bei größeren Pumpendrücken biegt sich die Membran (3) mehr durch, so daß der Ventilsitz ebenfalls mehr in Richtung Anker (9) bewegt wird, wodurch sich die Schließbahn verkürzt. Hierdurch kann der Steuerdruck unabhängig vom Pumpendruck bei gleich hohen Strömen immer den gleichen prozentualen Wert des Pumpendruckes haben.

## Beschreibung

Die Erfindung betrifft ein Magnetventil gemäß den Merkmalen des Oberbegriffs des Anspruchs 1.

Das in WO 87/00963 beschriebene Proportionalitäts-Magnetventil weist einen innerhalb eines Magnetkernes axial angeordneten Betätigungsstift auf, an dessen Stirnseite ein Ventilkegel zum Abdichten einer Öffnung eines Ventilsitzes an einer Drosselstelle des Magnetventils vorgesehen ist. An seinem dem Ventilkegel abgewandten Ende ist der Betätigungsstift feststehend mit einer sogenannten Rückschlußplatte in Verbindung. Die Rückschlußplatte ist durch das Magnetfeld der Erregerspule betätigbar und stellt somit das verstellbare Teil der Betätigungseinrichtung dar, während der Magnetkern das feststehende Teil bildet. Auf der Seite der Rückschlußplatte ist in dem Gehäuse des Magnetventils eine Rückstellfeder in Form einer Scheibenfeder an ihrem Außenumfang in axialer Richtung festgelegt. An ihrer radialinneren Einspannstelle ist die Rückstellfeder durch eine zwischen der Rückschlußplatte und der Rückstellfeder angeordnete Tellerfeder in Anlage an einem an der Rückschlußplatte angebrachten Bund gehalten.

Ein weiteres Proportionalitätsventil ist aus DE 44 15 096 A1 bekannt. Das Magnetventil weist innerhalb eines zylindrischen Gehäuses eine auf einen Spulkenkörper gewickelte Erregerspule auf. In einer Durchgangsöffnung des Spulenkörpers ist ein bei Bestromung der Erregerspule entlang einer Mittenachse verschiebbarer Ankerkolben angeordnet, durch den ein an einer Stirnseite des Ankerkolbens angeordnetes Dichtelement in einen Ventilsitz eines Ventilteiles drückbar ist. Gemäß der Erfindung ist das Dichtelement und der Ventilsitz exzentrisch zur Mittenachse des Ankerkolbens angeordnet. Darüber hinaus ist eine Druckmittelzuführung in den Innenraum des Gehäuses vorgesehen, um Druckmittel durch diese Druckmittelzuführung in den Innenraum des Gehäuses zu leiten und auf den Ankerkolben in Richtung Dichtelement Druck auszuüben.

Um bei diesem bekannten Proportionalitäts-Magnetventil eine weitgehende Unabhängigkeit von unterschiedlichen hydraulischen Kräften und damit unterschiedlichen Pumpendrücken zu erreichen, ist dem Proportionalitäts-Magnetventil eine Federkraft überlagert. Die bei Bestromung der Erregerspule auftretende Magnetkraft muß folglich gegen die am Ventilsitz auftretende hydraulische Kraft des Druckmittels sowie gegen die Federkraft arbeiten, welche gegenüber der am Ventilsitz auftretenden hydraulischen Kraft sehr groß ist. Zur Betätigung des bekannten Magnetventils ist somit sowohl eine große Magnetkraft als auch eine große Hubarbeit erforderlich. Da sich zudem das zentral angeordnete zwangsgeführte Dichtelement an der Spitze des Betätigunsgstiftes bzw. Stößels nie exakt konzentrisch im Ventilsitz befindet, treten zwangsweise am Dichtelement Reibungskräfte auf. Diese Reibungskräfte haben eine Vergrößerung der hydraulischen Hysterese des Magnetventils zur Folge.

Die Erfindung hat das Ziel, ein Magnetventil anzugeben, das die erwähnten Nachteile nicht aufweist, in einfacher Weise herzustellen ist und bei dem sichergestellt ist, daß das Magnetventil unabhängig vom Pumpendruck immer bei einem gleich groß angelegten Strom vollständig geschlossen ist.

Dieses Ziel wird durch ein Magnetventil mit den Merkmalen des Anspruchs 1 erreicht.

Weiterbildungen der Erfindung sind Gegenstand der Unteransprüche.

Das Magnetventil nach der Erfindung weist also im wesentlichen eine stirnseitig am Gehäuse des Magnetventils angeordnete Membrane auf, die feststehend mit einem Ventilsitz verbunden ist. Beim Einsatz des Magnetventils kann so der Pumpendruck auf die Stirnfläche der Membran einwirken, um diese in Richtung Anker auszulenken. Durch die feststehende Verbindung des Ventilsitzes mit der Membran wird auch der Ventilsitz ausgelenkt, so daß sich bei höheren Pumpendrücken im Vergleich zu niederen Pumpendrücken der Anker samt Ankerstößel weniger weit bewegen muß, um das Dichtelement, z.B. eine Dichtkugel, in den Ventilsitz zu pressen, so daß das Ventil sicher schließt. Dies bedeutet auch, daß das Magnetventil, unabhängig vom außen anstehenden Pumpendruck, der stirnseitig an der Membran anliegt, immer bei einem gleich hohen Strom, der durch die Erregerspule fließt, sicher geschlossen ist.

Bei dem Magnetventil nach der Erfindung ist es möglich bei vorgehender Bestromung der Erregerspule, unabhängig vom Pumpendruck, an einer Meßblende einen zum jeweiligen Pumpendruck gleichen prozentualen Steuerdruck zu erzeugen.

In einer bevorzugten Ausführungsform der Erfindung ist der Anker des Magnetventiles an seinen beiden Stirnseiten an jeweils einer Federeinrichtung, z.B. einer Druckfeder, abgestützt. Durch die beiderseitig am Ankerkolben angeordnete Federeinrichtung wird garantiert, daß die Federkraft in Hubanfangsstellung, d.h. bei keiner Bestromung, Null ist. Ferner ist durch die Federeinrichtung bei kleinster Ankerbewegung ein präziser Federkraftanstieg sichergestellt.

In einer besonderen Weiterbildung der Erfindung ist die Membran aus Metall, z. B. Stahl gefertigt und plattenförmig bzw. scheibenförmig ausgebildet. Die platten- bzw. scheibenförmige Membran ist an ihrem außen umlaufendem Rand mit einem Kragen versehen, der feststehend am Gehäuse des Magnetventils befestigt ist. Der umlaufende Kragen kann beispielsweise durch Verschweißen, Kleben oder ähnliches an dem Gehäuse des Magnetventiles befestigt werden.

Vorzugsweise weist die Membran im Bereich der Mittenachse eine Öffnung auf, in welcher ein den Ventilsitz bildendes Teil feststehend gehalten ist. Diese Lösung stellt sicher, daß das Druckmittel einerseits die Membran stirnseitig beaufschlagen kann, damit diese auslenkt, und andererseits das Druckmittel durch die Membran in den Ventilsitz strömen kann, um im Falle des geöffneten Ventiles, d.h. freigegebenem Dichtelement, das Dichtelement beiseite zu drücken. Dann kann das Druckmittel in den Ausgangskanal des Magnetventiles fließen. Drückt dagegen der Anker bei entsprechender Bestromung das Dichtelement mit ausreichender Kraft dank einer Bestromung der Erregerspule gegen den Ventilsitz, kann das Druckmittel nicht durch das Magnetventil fließen.

Zweckmäßigerweise ist das in einer Dichtelementführung geführte Dichtelement als Kugel ausgebildet. Die Dichtelementführung und Kugel weisen eine gute Oberflächengüte auf, so daß eine Bewegung des Dichtelementes innerhalb der Dichtelementführung wenig Reibung ausgesetzt ist. Die Dichtelementführung kann aus Metall oder einem geeigneten Kunststoff bestehen.

Als Dichtelementführung können beispielsweise radial um die Mittenachse herum angeordnete Führungsstege vorgesehen werden.

Weitere Vorteile und Ausführungsformen der Erfindung werden nachfolgend im Zusammenhang mit Figuren näher erläutert. Es zeigen
- Figur 1: eine Schnittansicht eines erfindungsgemäßen Magnetventiles mit Ventilsitz, welcher feststehend mit einer Membran verbunden ist und
- Figur 2: eine Steuerdruck/Strom-Kennlinie zu dem Magnetventil von Figur 1.

In den nachfolgenden Figuren bezeichnen gleiche Bezugszeichen, sofern nicht anders angegeben, gleiche Teile mit gleicher Bedeutung.

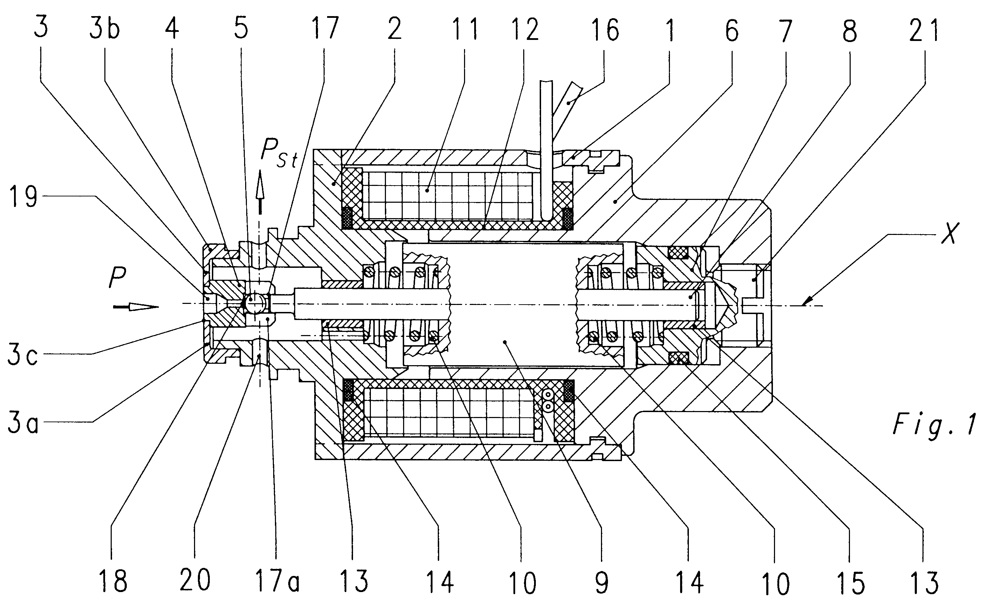

In Figur 1 ist ein Ausführungsbeispiel eines erfindungsgemäßen Magnetventils dargestellt, welches unabhängig von einem hydraulisch anstehenden Zulaufdruck P eines Druckmittels bei gleich großer Bestromung einer Erregerspule 11 mindestens annähernd den gleichen prozentualen Steuerdruck Pₛₜ an einer Meßblende erzeugt. Ein solches Magnetventil wird auch als druckausgeglichenes Proportionalitäts-Magnetventil bezeichnet. Dies bedeutet, daß das Magnetventil bei voller Bestromung trotz unterschiedlich großer Kräfte am Ventilsitz 3, die durch unterschiedliche Zulaufdrücke P hervorgerufen werden, gerade sperrt.

Das in Figur 1 dargestellte Magnetventil weist ein zylindrisches Gehäuse 1 auf, in welchem die Erregerspule 11 auf einen Spulenkörper 12 gewickelt ist. Das Gehäuse 1 des Magnetventils schließt an seinem in Figur 1 gezeigten linken Ende mit einem noch näher zu erläuternden Ventilteil ab. In einer axialen Durchgangsöffnung des Spulenkörpers ist ein Ankerkolben 9 entlang seiner Mittenachse X verschiebbar angeordnet. Hierfür sitzt in einer Durchgangsöffnung des Ankerkolbens 9 eine Ankerstange 8, die sich über die beiden stirnseitigen Enden des Ankerkolbens 9 u.a. hinaus erstreckt. Die Ankerstange 8 dient dem Ankerkolben 9 als Führung. Die Stange 8 kann mit ihrem in Figur 1 links dargestellten Ende auf ein Dichtelement 5, hier eine Dichtkugel, einwirken, und diese gegen eine Öffnung des Ventilsitzes 4 drücken, sofern die Erregerspule 11 in ausreichender Weise bestromt wird, wobei der Anker 9 samt Ankerstange 8 nach links bewegt wird.

Im dargestellten Ausführungsbeispiel von Figur 1 ist der geschlossene Zustand des Magnetventiles gezeigt. Bei Bestromung der Erregerspule 11 mit einem über Zuleitungen 16 geführten Strom wird eine Magnetkraft auf den Ankerkolben 9 ausgeübt, so daß sich dieser in Richtung Ventilsitz 4 bewegt. Das Dichtelement 5 ist zum Abdichten der bereits erwähnten Öffnung 18 des Ventilsitzes 4 am Ende einer zur Zuführung des Druckmittels dienenden Bohrung 19 angeordnet. Die Bohrung 19 läuft im Ausführungsbeispiel von Figur 1 durch den gesamten Ventilsitz 4 und endet in der Öffnung 18, die durch die Dichtkugel 5 verschließbar ist. Die Bohrung 19 ist im dargestellten Ausführungsbeispiel auf der Mittenachse X liegend angeordnet.

Darüber hinaus verfügt das Magnetventil über Ablaufbohrungen 20, aus denen das Druckmittel austreten kann, sofern der Ventilsitz 4 freigegeben ist. Dies ist der Fall, wenn die Erregerspule 11 nicht von Strom durchflossen wird, der Ankerkolben 9 samt Ankerstange 8 in seine Ruhestellung bewegt ist und die Dichtkugel 5 aufgrund des Druckes P des angelegten Druckmittels von der Öffnung 18 weggedrückt wird.

Erfindungsgemäß ist der Ventilsitz 4 feststehend mit einer Membran 3 verbunden. Die Membran 3, die ein Metallteil, z. B. ein Stahlteil, sein kann, weist im vorliegenden Ausführungsbeispiel ein scheibenförmiges Teil 3a auf, welches mit einer mittigen Öffnung 3c versehen ist. In dieser Öffnung 3c ist der Ventilsitz 4 gehalten. Das scheibenförmige Teil 3a der Membran 3 wird in seiner Dicke dem jeweiligen Bereich des Pumpendrucks angepaßt. Das scheibenförmige Teil 3a der Membran steht orthogonal zur Mittenachse X und weist an seinem außen umlaufenden Rand einen in Richtung Anker 9 vorspringenden Kragen 3b auf. Dieser Kragen 3b ist feststehend mit dem Gehäuse 1 bzw. einem Polkern 2 des Magnetventiles in Verbindung. Im Ausführungsbeispiel von Figur 1 ist der umlaufende Kragen 3b der Membran 3 feststehend mit dem Polkern 2, in dem sich auch die Ablaufbohrungen 20 befinden, verbunden. Dies kann beispielsweise durch Schweißen, Kleben oder ähnliche Verfahren erfolgen.

Die Membran 3 muß bei dem Magnetventil nach der Erfindung so dimensioniert sein, daß unterschiedliche Zulaufdrücke P an der Stirnseite der Membran 3 dazu führen, daß die Membran unterschiedlich weit ausgelenkt wird. Bei höheren Zulaufdrücken P muß die Auslenkung größer sein als bei niedrigen Zulaufdrücken P, so daß mit zunehmendem Zulaufdruck der Weg der Ankerstange 8, und damit auch der Weg des Ankers 9, kürzer ist, um die Öffnung 18 des Ventilsitzes 14 sicher zu schließen.

Bei größeren Pumpendrücken wird die Membran 3 mehr in Richtung Anker 9 gewölbt, so daß sich die Schließbahn der Ankerstange 8 in entsprechender Weise verkürzt. Somit kann mit gleichem Strom durch die Erregerspule 11 bei unterschiedlich anstehenden Zulaufdrücken P des Druckmittels dafür gesorgt werden, daß der gleiche prozentuale Steuerdruck Pₛₜ in den Ablaufbohrungen 20 vor der Meßblende ansteht.

Wie aus der Schnittansicht von Figur 1 ersichtlich, weist das Magnetventil eine besondere Führungseinrichtung für den Anker 9 bzw. die Ankerstange 8 auf. So ist die Ankerstange 8 an ihren beiden Enden in Lagerbuchsen 13 gelagert. Die links dargestellte Lagerbuchse 13 ist am Polkern 2 befestigt, während die rechts dargestellte Lagerbuchse 13 in einem Justierteil 7 sitzt, das sich koaxial um die Lagerbuchse 13 herumerstreckt und mit einem Dichtring 15 gegen eine Innenwandung eines Flanschrohres 6 abgedichtet ist.

Der Ankerkolben 9 stützt sich an seiner linken und rechten Stirnseite jeweils über eine Federeinrichtung 10 ab. Die Federeinrichtung 10 ist im Ausführungsbeispiel von Figur 1 als schraubenförmige Druckfeder ausgebildet, die die aus dem Ankerkolben 9 herausragenden Enden der Ankerstange 8 teilweise umgibt. Die an der linken Stirnseite des Ankerkolbens 9 vorgesehene Federeinrichtung 10 stützt sich einerseits am Polkern 2 und andererseits an der rechten Stirnseite des Ankerkolbens 9 ab. Die gegenüberliegende Federeinrichtung 10 stützt sich an der rechten Stirnseite des Ankerkolbens 9 einerseits und andererseits an dem Justierteil 7 ab, über die die Hublage des Ankerkolbens 9 einstellbar ist. Das Justierteil 7 ist über eine Stellschraube 21 axial verschiebbar, wodurch die Hublage des Ankerkolbens 9 sowie die Hublage des Ventilsitzes 5 exakt vorjustierbar ist.

Um ein sicheres Sperren des Ventilsitzes 4 durch das Dichtelement 5 zu gewährleisten, mußte bisher der Ankerkolben 9 mindestens so viel Kraft auf das Dichtelement 5 ausüben, daß dieses gegen die Kraft des Druckmittels, also den Zulaufdruck P, in die Öffnung des Ventilsitzes 4 gedrückt wird. Der bei nicht druckausgeglichenen Magnetventilen hierfür notwendige Strom mußte bisher nachteiligerweise um so höher eingestellt werden, je höher der Zulaufdruck P am Ventilsitz war.

Erfindungsgemäß wird dieser Nachteil durch die Verwendung der auslenkbaren Membran 3 vermieden. Bei höheren Zulaufdrücken P verschiebt sich der Ventilsitz 4 dank der feststehenden Verbindung mit der Membran 3 in Richtung Anker 9, so daß der Hubweg für ein sicheres Verschließen der Öffnung 18 im Ventilsitz 4 mit höheren Zulaufdrücken P verkürzt wird.

Wie aus der Schnittansicht von Figur 1 weiter ersichtlich, wird das Dichtelement 5 in Dichtelementführungen 17 geführt. Diese Dichtelementführungen 17 können beispielsweise Führungsstege 17a sein, die im Winkel von 90° zueinander versetzt um das Dichtelement 5, hier die Dichtkugel, angeordnet sind. Vorzugsweise weisen die Außenoberfläche des Dichtelementes 5 und die Innenoberflächen der Dichtelementführungen 17 eine gute Oberflächengüte auf, so daß das Dichtelement 5 weitgehend reibungsfrei innerhalb der Dichtelementführung 17 geführt werden kann.

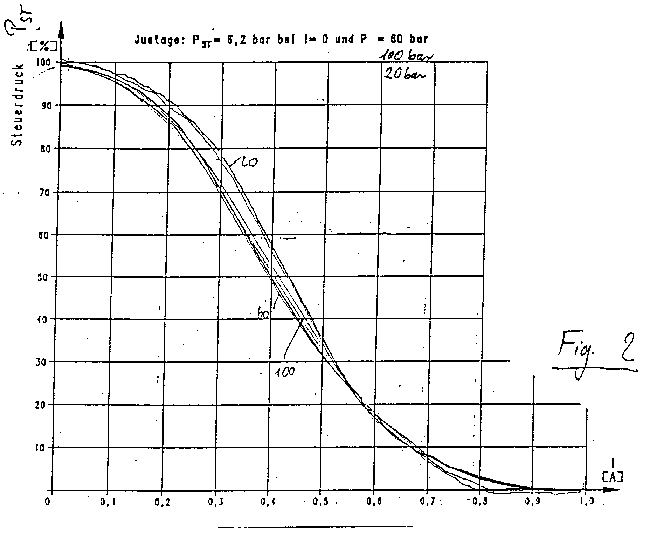

In Figur 2 ist ein Diagramm dargestellt, das die Abhängigkeit des prozentualen Steuerdruckes Pₛₜ an einer Meßblende bei verschiedenen Stromstärken I des Stromes durch die Erregerspule 11 darstellt. Über das Justierteil 7 von Figur 1 ist das Magnetventil in diesem Beispiel so justiert, daß bei einem Strom von I = 0 und einem Zulaufdruck P = 60 bar ein Steuerdruck Pₛₜ = 6,2 bar vor der Meßblende d. h. an der Ablaufbohrung 20 ansteht. Der Strom I wurde zur Aufnahme der Kennlinie bei einem Zulaufdruck von P = 60 bar kontinuierlich auf 1,0 Ampere erhöht und die entsprechende Kennlinie in das Kennlinienfeld eingetragen.

In einem zweiten Versuch wurde ähnlich vorgegangen, allerdings betrug der Zulaufdruck P jetzt 100 bar. In einem dritten Versuch wurde der Zulaufdruck P = 20 bar gewählt. Ergebnis der Messung war, daß sich der Kennlinienverlauf nahezu nicht änderte, dank der an der Stirnseite sitzenden Membran 3, die feststehend mit dem Ventilsitz 4 verbunden ist.

Damit ist gezeigt, daß der prozentuale Steuerdruck Pₛₜ unabhängig vom außen anstehenden Zulaufdruck P des Druckmittels bei gleicher Bestromung der Erregerspulen immer den gleichen prozentualen Wert des Pumpendrucks aufweist.

### Bezugszeichenliste

- 1: Gehäuse
- 2: Polkern
- 3: Membrane
- 3a: scheibenartiges Teil
- 3b: Kragen
- 3c: Öffnung
- 4: Ventilsitz
- 5: Dichtkugel
- 6: Flanschrohr
- 7: Justiersitz
- 8: Ankerstange
- 9: Anker
- 10: Druckfeder
- 11: Spule
- 12: Spulenkörer
- 13: Lagerbuchse
- 14: Dichtring
- 15: Dichtring
- 16: Spulenanschluß
- 17: Dichtelementführung
- 17a: Stege
- 18: Öffnung
- 19: Bohrung
- 20: Ablaufbohrung
- 21: Einstelischraube
- X: Mittenachse

## Patentansprüche

1. Magnetventil mit einem Gehäuse (1), in welchem eine Erregerspule (11) auf einen Spulenkörper (12) gewickelt und in einer axialen Durchgangsöffnung des Spulenkörpers (12) ein bei Bestromung der Erregerspule (11) entlang einer Mittenachse (X) verschiebbarer Anker (9), durch den ein an einer Stirnseite des Ankers (9) angeordnetes Dichtelement (5) in einen Ventilsitz (4) drückbar ist, angeordnet ist, dadurch gekennzeichnet, daß der Ventilsitz (4) feststehend mit einer stirnseitig am Gehäuse (1) des Magnetventiles angeordneten Membran (3) verbunden ist, daß die Membran (3) orthogonal zur Mittenachse (X) angeordnet ist, und daß die Membran (3) eine Öffnung aufweist, durch welche in den Ventilsitz (4) Druckmittel führbar ist.

2. Magnetventil nach Anspruch 1, dadurch gekennzeichnet, daß sich der Anker (9) an seinen beiden Stirnseiten an jeweils einer Federeinrichtung (10) abstützt.

3. Magnetventil nach Anspruch 2, dadurch gekennzeichnet, daß die Federeinrichtung (10) zwei Druckfedern aufweist.

4. Magnetventil nach einem der Ansprüche 1 bis 3, dadurch gekennzeichnet, daß die Membran (3) ein plattenförmiges oder scheibenförmiges Teil (3a) mit einem außen umlaufenden Kragen (3b) aufweist, welcher feststehend am Gehäuse (1) des Magnetventils befestigt ist.

5. Magenetventil nach einem der Ansprüche 1 bis 4, dadurch gekennzeichnet, daß die Membran (3) im Bereich der Mittenachse (X) eine Öffnung (3c) aufweist, in welcher der Ventilsitz (4) feststehend gehalten ist.

6. Membran nach einem der Ansprüche 1 bis 5, dadurch gekennzeichnet, daß die Membran (3) als Metalischeibe oder Stahischeibe ausgebildet ist.

7. Magnetventil nach einem der Ansprüche 1 bis 6, dadurch gekennzeichnet, daß das Dichtelement (5) eine von einer Dichtelementführung (17) geführte Dichtkugel ist.

8. Magnetventil nach Anspruch 7, dadurch gekennzeichnet, daß die Dichtkugel (5) und/oder Dichtelementführung (17) aus Metall oder einem geeigneten Kunststoff bestehen.

9. Magnetventil nach Anspruch 7 oder 8, dadurch gekennzeichnet, daß die Dichtelementführung (17) radial um die Mittenachse (X) versetzt angeordnete Stege (17a) aufweist.
